# EUROPÄISCHE PATENTANMELDUNG

(11) **EP 1 710 010 A1**
(43) Veröffentlichungstag der Anmeldung: **11.10.2006**
(21) Anmeldenummer: 06006664.4
(22) Anmeldetag: 30.03.2006
(51) Int. Cl.: B01D 53/94, F01N 11/00, F01N 3/20

(54) **Vorrichtung und Verfahren zur selektiven katalytischen Reduktion von Abgasen aus einem Verbrennungsmotor**

(30) Priorität: 01.04.2005 DE 102005014891
(71) Anmelder: DaimlerChrysler AG, 70567 Stuttgart (DE)
(72) Erfinder: Gärtner, Uwe, 73630 Remshalden (DE); Kozuch, Peter, 71549 Auenwald (DE)

(57) **Zusammenfassung**

Die Erfindung betrifft eine Vorrichtung und ein Verfahren zur selektiven katalytischen Reduktion von Abgasen aus einem Verbrennungsmotor, insbesondere einem direkteinspritzenden Dieselmotor. Das Abgasnachbehandlungssystem enthält einen SCR-Katalysator (30); eine Reduktionsmittel-Dosiervorrichtung (15), die stromauf des SCR-Katalysators (30) angeordnet ist, zum Zugeben einer Harnstoff-Wasser-Lösung als Reduktionsmittel; und ein Steuergerät (38) zum Ansteuern der Reduktionsmittel-Dosiervorrichtung (15). Ferner sind ein erster CO₂₋Sensor (32) zum Erfassen einer CO₂-Konzentration stromauf der Reduktionsmittel-Dosiervorrichtung (15) und ein zweiter CO₂₋Sensor (34, 34') zum Erfassen einer CO₂-Konzentration stromab der Reduktionsmittel-Dosiervorrichtung (15) angeordnet, sodass das Steuergerät (38) die Reduktionsmittel-Dosiervorrichtung (15) in Abhängigkeit von einer durch den ersten und den zweiten CO₂-Sensor (32, 34, 34') erfassten CO₂₋Konzentrationsdifferenz ansteuern kann.

## Beschreibung

Die Erfindung betrifft eine Vorrichtung und ein Verfahren zur selektiven katalytischen Reduktion von Abgasen aus einem Verbrennungsmotor, insbesondere einem direkteinspritzenden Dieselmotor.

Da der Hochdruckprozess in einem direkteinspritzenden Dieselmotor immer überstöchiometrisch abläuft, sind die Konzentrationen von unverbrannten Kohlenwasserstoffen und Kohlenstoffmonoxid im Abgas bei den heute üblichen hohen Abgasrückführraten prinzipbedingt niedrig. Zudem lassen sich diese Konzentrationen trotz der niedrigen Abgastemperatur von Dieselmotoren unter Sauerstoffüberschuss durch moderne Oxidationskatalysatoren nahezu vollständig nachoxidieren.

Problematisch ist demgegenüber die Abgasnachbehandlung von Stickoxid- und Rußemissionen. Zum Senken dieser gesundheitsgefährlichen Schadstoffkomponenten werden heutzutage im Allgemeinen so genannte SCR-Katalysatoren zur selektiven katalytischen Reduktion von Stickoxiden eingesetzt. Hierbei wird NH₃ oder ein NH₃ freisetzender Stoff als Reduktionsmittel mit Unterstützung von Druckluft oder unverdünnt in flüssiger Form vor dem SCR-Katalysator in den Abgastrakt eingedüst. Das Ammoniak wird im SCR-Katalysator zur Reduktion der Stickoxide verwendet.

Die Eindüsung des NH₃ oder von NH₃ freisetzenden Stoffen als Reduktionsmittel wird durch ein Steuergerät geregelt. So beschreibt zum Beispiel die DE 41 17 143 A1 ein Verfahren zur selektiven katalytischen Reduktion von Abgasen aus Kraftfahrzeugdieselmotoren, bei dem die getaktete überstöchiometrische Zugabe von NH₃ oder NH₃ freisetzenden Stoffen mittels einer Berechnung einer NH₃-Konzentration im Katalysatorbett aus bekannten Größen des Dieselmotors und des Abgasnachbehandlungssystems geregelt wird.

Die DE 42 17 552 C1 schlägt zur selektiven katalytischen Reduktion von Abgasen aus einem Verbrennungsmotor die Verwendung eines ersten NH₃-Sensors zum Erfassen einer NH₃₋Konzentration im Abgas nach dem SCR-Katalysator und eines zweiten NH₃-Sensors zum Erfassen einer NH₃-Adsorption im Katalysatorbett vor, um basierend auf den gemessenen NH₃₋Größen die Zugabe des NH₃-Reduktionsmittels zu regeln.

Im Fall der DE 198 28 928 A1 wird schließlich die selektive katalytische Reduktion von Abgasen aus einem Verbrennungsmotor mittels eines NOₓ-Sensors stromab des SCR-Katalysators überwacht.

Der vorliegenden Erfindung liegt demgegenüber die Aufgabe zugrunde, eine verbesserte Vorrichtung und ein verbessertes Verfahren zur selektiven katalytischen Reduktion von Abgasen aus einem Verbrennungsmotor bereitzustellen.

Diese Aufgabe wird durch eine Vorrichtung mit den Merkmalen des Anspruchs 1 bzw. ein Verfahren mit den Merkmalen des Anspruchs 10 gelöst. Vorteilhafte Ausgestaltungen und Weiterbildungen der Erfindung sind Gegenstand der jeweiligen Unteransprüche.

Die Vorrichtung zur selektiven katalytischen Reduktion von Abgasen aus einem Verbrennungsmotor enthält einen Katalysator zur selektiven katalytischen Reduktion von Stickoxiden aus Abgasen eines Verbrennungsmotors; eine Reduktionsmittel-Dosiervorrichtung, die stromauf des SCR-Katalysators angeordnet ist, zum Zugeben einer Harnstoff-Wasser-Lösung als Reduktionsmittel; und ein Steuergerät zum Ansteuern der Reduktionsmittel-Dosiervorrichtung. Erfindungsgemäß sind ferner ein erster CO₂-Sensor zum Erfassen einer CO₂-Konzentration stromauf der Reduktionsmittel-Dosiervorrichtung und ein zweiter CO₂-Sensor zum Erfassen einer CO₂-Konzentration stromab der Reduktionsmittel-Dosiervorrichtung angeordnet, und das Steuergerät steuert die Reduktionsmittel-Dosiervorrichtung in Abhängigkeit von einer durch den ersten und den zweiten CO₂-Sensor erfassten CO₂-Konzentrationsdifferenz an. Auf diese Weise kann das Reduktionsmittel bedarfsgerecht zugemessen werden. Dabei kann das Steuergerät auch als Regeleinrichtung wirken, welche auf die Reduktionsmittel-Dosiervorrichtung als Stelleinrichtung einwirkt, so dass die Reduktionsmittelzugabe ins Abgas geregelt auf der Basis Signale der CO₂-Sensoren erfolgen kann. Die Reduktionsmittelzugabe kann jedoch auch gesteuert auf der Basis von Kennlinien oder Kennfeldern vorgenommen werden, welche dem Steuergerät zu Verfügung stehen. Je nach Betriebspunkt wird die zu dosierende Reduktionsmittelmenge den Kennlinien oder Kennfeldern entnommen und die Dosiervorrichtung entsprechend angesteuert. Vorzugsweise erfolgt eine überstöchiometrische Zugabe des Reduktionsmittels.

Die als Reduktionsmittel durch die Reduktionsmittel-Dosiervorrichtung zugegebene Harnstoff-Wasser-Lösung (nachfolgend auch kurz als HWL bezeichnet) verdampft und hydrolysiert bei Anwesenheit von Wasser zu Ammoniak und Kohlendioxid. Dieses Nebenprodukt der Hydrolyse, nämlich Kohlendioxid, wird nun als Messgröße zur Regelung der Reduktionsmittel-Dosiervorrichtung verwendet. Über die erfasste Differenz der CO₂₋Konzentrationen vor und nach der Reduktionsmittel-Dosiervorrichtung kann aus dem bekannten Abgasmassenstrom die tatsächlich eingedüste Masse der HWL berechnet werden. Basierend auf dieser Information kann das Steuergerät dann die dosierende HWL-Menge ermitteln und die Dosiervorrichtung optimal ansteuern.

Vorzugsweise ist der zweite CO₂-Sensor in einem solchen Abstand stromab der Reduktionsmittel-Dosiervorrichtung vorgesehen, dass an dem zweiten CO₂-Sensor eine vollständige Hydrolyse des Reduktionsmittels erfolgt ist.

Der zweite CO₂-Sensor kann sowohl stromauf des SCR-Katalysators als auch stromab des SCR-Katalysators angeordnet sein, da die Reaktionen im SCR-Katalysator die CO₂-Konzentration im Abgasstrom nicht beeinflussen. Die Anordnung des zweiten CO₂₋Sensors stromab des SCR-Katalysators ist aufgrund der somit längeren Hydrolysestrecke für das Reduktionsmittel vorteilhaft.

In einer Ausgestaltung der Erfindung kann der erste CO₂₋Sensor auch ein virtueller Sensor sein, der die CO₂-Konzentration aus dem Steuergerät bekannten Größen berechnet.

In einer weiteren Ausgestaltung der Erfindung sind der erste und der zweite CO₂-Sensor als ein CO₂-Differenzsensor mit hoher Empfindlichkeit ausgebildet. Diese Variante ist insbesondere dann von Vorteil, wenn die vom zweiten CO₂-Sensor gemessene CO₂-Konzentration nur wenig höher als die vom ersten CO₂-Sensor erfasste ist.

In einer weiteren bevorzugten Ausgestaltung der Erfindung ist ferner ein NH₃-Sensor zum Erfassen einer NH₃-Konzentration stromab des SCR-Katalysators angeordnet. In Kombination mit einem hinter dem SCR-Katalysator angeordneten NH₃-Sensor zur Erfassung des NH₃-Schlupfes nach dem SCR-Katalysator ist es möglich, den Anteil des im SCR-Katalysator umgesetzten bzw. eingespeicherten Ammoniaks zu quantifizieren.

Zusätzlich zu dem SCR-Katalysator ist bevorzugt ferner stromauf der Reduktionsmittel-Dosiervorrichtung ein bekannter Oxidationskatalysator vorgesehen.

In einer noch weiteren Ausgestaltung der Erfindung ist einer Reduktionsmitteldüse der Reduktionsmittel-Dosiervorrichtung außerdem eine Druckluftdüse zugeordnet, um das Reduktionsmittel mit Unterstützung von Druckluft einzudüsen.

Obige sowie weitere Merkmale und Vorteile der Erfindung werden aus der nachfolgenden Beschreibung eines bevorzugten, nicht-einschränkenden Ausführungsbeispiels der Erfindung unter Bezugnahme auf die beiliegenden Zeichnungen besser verständlich. Darin zeigt die einzige Figur eine schematische Darstellung des Aufbaus eines Abgasnachbehandlungssystems für einen Verbrennungsmotor gemäß einem bevorzugten Ausführungsbeispiel der vorliegenden Erfindung.

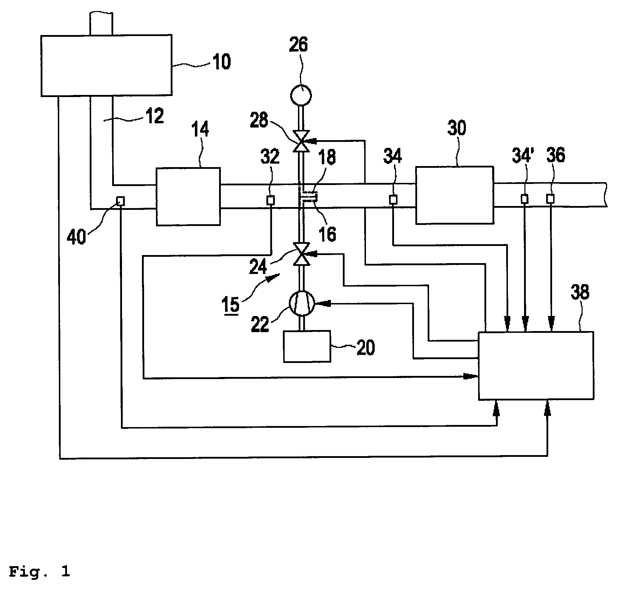

In Fig. 1 ist schematisch der Aufbau eines Abgasnachbehandlungsystems eines Verbrennungsmotors 10, insbesondere eines direkteinspritzenden Dieselmotors, gemäß einem Ausführungsbeispiel der Erfindung veranschaulicht. In Fig. 1 ist dem Verbrennungsmotor die Bezugsziffer 10, einer Abgasleitung die Bezugsziffer 12, einem Oxidationskatalysator die Bezugsziffer 14 und einem SCR-Katalysator die Bezugsziffer 30 zugeordnet. Der Aufbau und die Funktionsweise des Verbrennungsmotors 10, des Oxidationskatalysators 14 und des SCR-Katalysators 30 sind dem Fachmann bekannt und werden hier nicht näher erläutert, da sie nicht Gegenstand der Erfindung sind.

Stromauf des SCR-Katalysators 30 zur selektiven katalytischen Reduktion der Stickoxide im Abgasstrom-aus dem Verbrennungsmotor 10 ist eine Reduktionsmittel-Dosiervorrichtung 15 vorgesehen. Diese Reduktionsmittel-Dosiervorrichtung 15 umfasst zum Beispiel einen Reduktionsmittelbehälter 20, eine Förderpumpe 22, ein Sperrventil 24 und eine in die Abgasleitung 12 ragende Reduktionsmitteldüse 16. Die Förderpumpe 22 und das Sperrventil 24 werden dabei durch ein Steuergerät 38 angesteuert.

Vorzugsweise ist der Reduktionsmitteldüse 16 in der Abgasleitung 12 eine Druckluftdüse 18 zugeordnet, die über ein Sperrventil 28 mit einer Druckluftquelle 26 verbunden ist. Auf diese Weise wird das Reduktionsmittel bevorzugt mit Unterstützung von Druckluft in die Abgasleitung 12 eingedüst. Alternativ ist es aber auch möglich, das Reduktionsmittel unverdünnt in flüssiger Form vor dem SCR-Katalysator 30 einzudüsen.

Als Reduktionsmittel wird eine Harnstoff-Wasser-Lösung (HWL) verwendet. Diese HWL verdampft und hydrolysiert bei Anwesenheit von Wasser zu Ammoniak nach der folgenden Reaktionsgleichung:

H₂NCONH₂ + H₂O → 2 NH₃ + CO₂

Dabei entsteht aus 1 Mol Harnstoff neben den für die selektive katalytische Reduktion von Stickoxiden im SCR-Katalysator 30 benötigten 2 Mol Ammoniak auch 1 Mol Kohlendioxid. Dieses Nebenprodukt der Hydrolyse wird gemäß der vorliegenden Erfindung wie folgt als Messgröße zur Regelung der Reduktionsmittel-Dosiervorrichtung 15 verwendet.

In der Abgasleitung 12 sind ein erster CO₂-Sensor 32 stromauf der Reduktionsmitteldüse 16 der Reduktionsmittel-Dosiervorrichtung 15 sowie ein zweiter CO₂-Sensor 34 stromab der Reduktionsmitteldüse 16 jeweils zum Erfassen einer CO₂₋Konzentration angeordnet. Der zweite CO₂-Sensor 34 ist dabei bevorzugt in einem solchen Abstand hinter der Reduktionsmitteldüse 16 angeordnet, der für eine vollständige Hydrolyse der eingedüsten HWL erforderlich ist. Aus der Differenz der CO₂-Konzentrationen nach und vor der Reduktionsmitteldüse 16 kann aus dem bekannten Abgasmassenstrom in der Abgasleitung 12 unter Voraussetzung einer vollständigen Hydrolyse der HWL einfach die eingedüste Masse der HWL berechnet werden. Basierend auf dieser Information steuert das Steuergerät 38 dann die Reduktionsmittel-Dosiervorrichtung 15 an.

Dem Steuergerät 38 werden hierzu neben den Messwerten des ersten und des zweiten CO₂-Sensors 32, 34 auch Messwerte des Verbrennungsmotors 10 und eines oder mehrerer Temperatursensoren 40 in der Abgasleitung 12 zugeführt.

Selbst wenn nur eine unvollständige Hydrolyse der HWL stattfindet, ist es mit dem erfindungsgemäßen System möglich, die Masse an hydrolysierter HWL zu berechnen. Aus dieser Größe ist dann direkt ableitbar, wie viel Ammoniak für den nach der Hydrolysestrecke angeordneten SCR-Katalysator 30 tatsächlich erzeugt worden ist. Somit eignet sich die erfindungsgemäße Sensorik 32, 34 auch zur Überwachung der Hydrolysegüte im Abgasnachbehandlungssystem.

In einer alternativen Ausführungsform der Erfindung ist der zweite CO₂-Sensor 34 nicht stromauf des SCR-Katalysators 30 angeordnet, sondern nach diesem vorgesehen, wie durch die Bezugsziffer 34' in Fig. 1 angedeutet. Durch die Anordnung des zweiten CO₂-Sensors 34' hinter dem SCR-Katalysator 30 wird die Hydrolysestrecke bis zur Messung der CO₂-Konzentration verlängert, wodurch die Messgenauigkeit erhöht werden kann. Andererseits wird die CO₂-Konzentration durch die Reaktionen im SCR-Katalysator 30 nicht beeinflusst.

Des Weiteren ist stromab des SCR-Katalysators 30 in dem Ausführungsbeispiel von Fig. 1 auch ein NH₃-Sensor 36 zur Erfassung eines NH₃-Schlupfes nach dem SCR-Katalysator 30 vorgesehen, dessen Messwert ebenfalls dem Steuergerät 38 zugeleitet wird. Durch diesen zusätzlichen NH₃-Sensor 36 ist es möglich, den Anteil des im SCR-Katalysator 30 umgesetzten bzw. eingespeicherten Ammoniak zu quantifizieren. Wird der Schlupf über dem NH₃-Sensor 36 konstant gehalten, kann der SCR-Katalysator 30 kein Ammoniak mehr speichern. Die Differenz der NH₃-Konzentrationen vor und nach dem SCR-Katalysator 30 ist somit ein direktes Maß für die Umsetzung im SCR-Katalysator 30 bzw. liefert Aussagen über den Zustand (z.B. Konvertierungsgrad über Lebensdauer) des SCR-Katalysators 30. Dabei wird die genannte NH₃-Konzentration vor dem SCR-Katalysator 30 aus der obigen CO₂-Messung berechnet.

Während die vorliegende Erfindung oben anhand eines bevorzugten Ausführungsbeispiels unter Bezugnahme auf die beiliegende Zeichnung beschrieben worden ist, ist es selbstverständlich, dass verschiedene Varianten und Modifikationen daran vorgenommen werden können, ohne den Schutzumfang der Erfindung zu verlassen, wie er durch die anhängenden Ansprüche definiert ist.

Zum Beispiel sind der erste und der zweite CO₂-Sensor 32 und 34 bzw. 34' in Fig. 1 als separate Sensoren ausgebildet. Alternativ ist es auch möglich, einen CO₂-Differenzsensor mit hoher Empfindlichkeit einzusetzen, dessen Messpunkte den Sensorpositionen des oben beschriebenen Ausführungsbeispiels entsprechen. Die Verwendung eines solchen CO₂-Differenzsensors kann deutliche Vorteile bieten, wenn die Erhöhung der CO₂-Konzentration an der Stelle des zweiten CO₂-Sensors 34, 34' im Vergleich zur Stelle des ersten CO₂-Sensors 32 relativ gering ist.

Als weitere Alternative zu dem oben beschriebenen Ausführungsbeispiel von Fig. 1 ist es auch möglich, anstelle des ersten CO₂-Sensors 32 einen virtuellen ersten CO₂-Sensor zu benutzen. Dieser virtuelle erste CO₂-Sensor berechnet die CO₂-Konzentration vor der Reduktionsmittel-Dosiervorrichtung 15 unter der Voraussetzung einer vollständigen Verbrennung des im Verbrennungsmotor 10 eingespritzten Kraftstoffes aus den im Steuergerät 38 bekannten Größen Luftmasse und Kraftstoffmasse. Diese Annahme ist zulässig, da im Dieselmotor 10 nur ein sehr geringer Anteil des Kraftstoffes nicht umgesetzt und in Form von HC- und CO-Emissionen emittiert wird. Ist der erste CO₂-Sensor 32 zudem stromab eines Oxidationskatalysators 14 vorgesehen, enthält die CO₂-Konzentration dort auch das Kohlendioxid aus der Nachoxidation der unverbrannten Abgasanteile im Oxidationskatalysator 14.

## Patentansprüche

1. Vorrichtung zur selektiven katalytischen Reduktion von Abgasen aus einem Verbrennungsmotor, mit
einem Katalysator (30) zur selektiven katalytischen Reduktion von Stickoxiden aus Abgasen eines Verbrennungsmotors (10);
einer Reduktionsmittel-Dosiervorrichtung (15), die stromauf des SCR-Katalysators (30) angeordnet ist, zum Zugeben einer Harnstoff-Wasser-Lösung als Reduktionsmittel; und
einem Steuergerät (38) zum Ansteuern der Reduktionsmittel-Dosiervorrichtung (15),
**dadurch gekennzeichnet, dass**
ferner ein erster CO₂-Sensor (32) zum Erfassen einer CO₂₋Konzentration stromauf der Reduktionsmittel-Dosiervorrichtung (15) angeordnet ist;
dass ferner ein zweiter CO₂-Sensor (34, 34') zum Erfassen einer CO₂-Konzentration stromab der Reduktionsmittel-Dosiervorrichtung (15) angeordnet ist; und
dass das Steuergerät (38) die Reduktionsmittel-Dosiervorrichtung (15) in Abhängigkeit von einer durch den ersten und den zweiten CO₂-Sensor (32, 34, 34') erfassten CO₂-Konzentrationsdifferenz ansteuert.

2. Vorrichtung nach Anspruch 1,
**dadurch gekennzeichnet, dass**
der zweite CO₂-Sensor (34, 34') in einem solchen Abstand stromab der Reduktionsmittel-Dosiervorrichtung (15) vorgesehen ist, dass an dem zweiten CO₂-Sensor eine vollständige Hydrolyse des Reduktionsmittels erfolgt ist.

3. Vorrichtung nach Anspruch 1 oder 2,
**dadurch gekennzeichnet, dass**
der zweite CO₂-Sensor (34) stromauf des SCR-Katalysators (30) angeordnet ist.

4. Vorrichtung nach Anspruch 1 oder 2,
**dadurch gekennzeichnet, dass**
der zweite CO₂-Sensor (34') stromab des SCR-Katalysators (30) angeordnet ist.

5. Vorrichtung nach einem der Ansprüche 1 bis 4,
**dadurch gekennzeichnet, dass**
der erste CO₂-Sensor (32) ein virtueller Sensor ist, der die CO₂-Konzentration aus dem Steuergerät (38) bekannten Größen berechnet.

6. Vorrichtung nach einem der Ansprüche 1 bis 4,
**dadurch gekennzeichnet, dass**
der erste und der zweite CO₂-Sensor (32, 34, 34') als ein CO₂-Differenzsensor ausgebildet sind.

7. Vorrichtung nach einem der Ansprüche 1 bis 6,
**dadurch gekennzeichnet, dass**
ferner ein NH₃-Sensor (36) zum Erfassen einer NH₃₋Konzentration stromab des SCR-Katalysators (30) angeordnet ist.

8. Vorrichtung nach einem der Ansprüche 1 bis 7,
**dadurch gekennzeichnet, dass**
ferner stromauf der Reduktionsmittel-Dosiervorrichtung (15) ein Oxidationskatalysator vorgesehen ist.

9. Vorrichtung nach einem der Ansprüche 1 bis 8,
**dadurch gekennzeichnet, dass**
einer Reduktionsmitteldüse (16) der Reduktionsmittel-Dosiervorrichtung (15) eine Druckluftdüse (18) zugeordnet ist, um das Reduktionsmittel mit Unterstützung von Druckluft einzudüsen.

10. Verfahren zur selektiven katalytischen Reduktion von Abgasen aus einem Verbrennungsmotor, bei welchem Stickoxide aus Abgasen eines Verbrennungsmotors (10) in einem Katalysator (30) selektiv katalytisch reduziert werden; und
stromauf des SCR-Katalysators (30) eine Harnstoff-Wasser-Lösung als Reduktionsmittel zugegeben wird;
**dadurch gekennzeichnet, dass**
eine erste CO₂-Konzentration stromauf der Reduktionsmittel-Zugabe erfasst wird;
dass eine zweite CO₂-Konzentration stromab der Reduktionsmittel-Zugabe erfasst wird; und
dass die Reduktionsmittel-Zugabe in Abhängigkeit von einer erfassten Differenz der ersten und der zweiten CO₂₋Konzentration eingestellt wird.

11. Verfahren nach Anspruch 10,
**dadurch gekennzeichnet, dass**
an der Stelle der zweiten CO₂-Konzentration eine vollständige Hydrolyse des zugegeben Reduktionsmittels erfolgt ist.

12. Verfahren nach Anspruch 10 oder 11,
**dadurch gekennzeichnet, dass**
die zweite CO₂-Konzentration stromauf des SCR-Katalysators (30) erfasst wird.

13. Verfahren nach Anspruch 10 oder 11,
**dadurch gekennzeichnet, dass**
die zweite CO₂-Konzentration stromab des SCR-Katalysators (30) erfasst wird.

14. Verfahren nach einem der Ansprüche 10 bis 13,
**dadurch gekennzeichnet, dass**
die erste CO₂-Konzentration aus bekannten Größen berechnet wird.

15. Verfahren nach einem der Ansprüche 10 bis 14,
**dadurch gekennzeichnet, dass**
ferner eine NH₃-Konzentration stromab des SCR-Katalysators (30) erfasst wird.

16. Verfahren nach einem der Ansprüche 10 bis 15,
**dadurch gekennzeichnet, dass**
das Reduktionsmittel mit Unterstützung von Druckluft eingedüst wird.
